Europäisches Patentamt

European Patent Office

Office européen des brevets

(11) Publication number: **0 431 702 A1**

(12) # EUROPEAN PATENT APPLICATION

(21) Application number: **90203191.3**

(22) Date of filing: **03.12.90**

(51) Int. Cl.5: **A23N 7/00**, F16K 31/363, F16K 47/00

(30) Priority: **04.12.89 NL 8902983**

(43) Date of publication of application:
**12.06.91 Bulletin 91/24**

(84) Designated Contracting States:
**AT BE CH DE ES FR GB IT LI LU NL SE**

(71) Applicant: **GOUDSCHE MACHINEFABRIEK B.V.**
**Coenecoop 88**
**NL-2741 PD Waddinxveen(NL)**

(72) Inventor: **Van der Schoot, Peter Willem**
**Carolus**
**Liesveld 3**
**NL-2964 AG Groot-Ammers(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

(54) Steam vessel with expansion valve.

(57) This invention relates to a steam vessel having a steam inlet conduit and a steam outlet conduit each comprising a valve, the valve in the outlet conduit having a steam blow-off duct connected to it, said outlet valve comprising a T-shaped conduit portion, one end of which connects to the steam outlet conduit of the vessel, the opposite end forming a substantially closed chamber and the third end, extending transverse of said two ends, connecting to the blow-off duct, a valve member being movable within said T-shaped conduit portion and adapted for coaction with a valve seat provided adjacent to the steam outlet conduit, and means for operating the valve member being connected to said opposite end. According to the invention the part located opposite said valve member is piston-shaped and adapted to coact with the wall of the substantially closed chamber, there being further provided a bypass between the substantially closed chamber and the steam vessel.

FIG.1

# STEAM VESSEL WITH EXPANSION VALVE

This invention relates to a steam vessel having a steam inlet conduit and a steam outlet conduit each comprising a valve, the valve in said outlet conduit having a steam blow-off duct connected to it, said outlet valve comprising a Tshaped conduit portion, one end of which connects to the steam outlet conduit of the vessel, the opposite end forming a substantially closed chamber and the third end, extending transverse of said two ends, connecting to the blow-off duct, a valve member being movable within said T-shaped conduit portion and adapted for coaction with a valve seat provided adjacent to the steam outlet conduit, and means for operating the valve member being connected to the opposite end.

In such a device known from NL patent specification 161.045, the valve extending into the closed chamber is operated via an outwardly extending valve rod by a lever whose other end coacts with a piston rod whose piston portion is arranged in a separate cylinder and is under the control of, on the one hand, a pressure spring and, on the other, of a medium to be supplied to the cylinder.

It is an object of the present invention to simplify such a relatively complicated device whose operation requires a separate medium.

To that effect the steam peeling device according to the invention is characterized in that the part located opposite said valve member is piston-shaped and adapted to coact with the wall of the substantially closed chamber, there being further provided a bypass between the substantially closed chamber and the steam vessel.

In further elaboration of the invention the diameter of the valve orifice may be smaller than the diameter of the oppositely located piston-shaped end, and further a bypass may be arranged between the substantially closed chamber and the steam blow-off duct.

In further elaboration of the invention the connection between the bypass and the steam vessel may be located upstream of a valve arranged in the steam inlet conduit.

A further improvement of the device is obtained when the valve seat is part of an intermediate ring with a conical passage. Ready disassembly of the valve seat is obtained when the T-shaped connecting member and the steam outlet conduit are interconnected by means of bolts with interposition of the intermediate ring.

A further improvement is obtained by arranging in the bypass between the substantially closed chamber and the blowoff duct, a manually operated throttle valve, in addition to a motor-operated control valve.

In a similar way, a motor-operated valve may also be arranged in the bypass between the closed chamber and the steam vessel.

A secure sealing of the valve relatively to the valve seat is obtained when the valve seat is provided with a groove adapted to receive a sealing ring. Thus a proper valve sealing is very easily ensured.

Two embodiments of the steam expansion valve will now be explained and illustrated with reference to the accompanying drawings, showing schematic cross-sectional views.

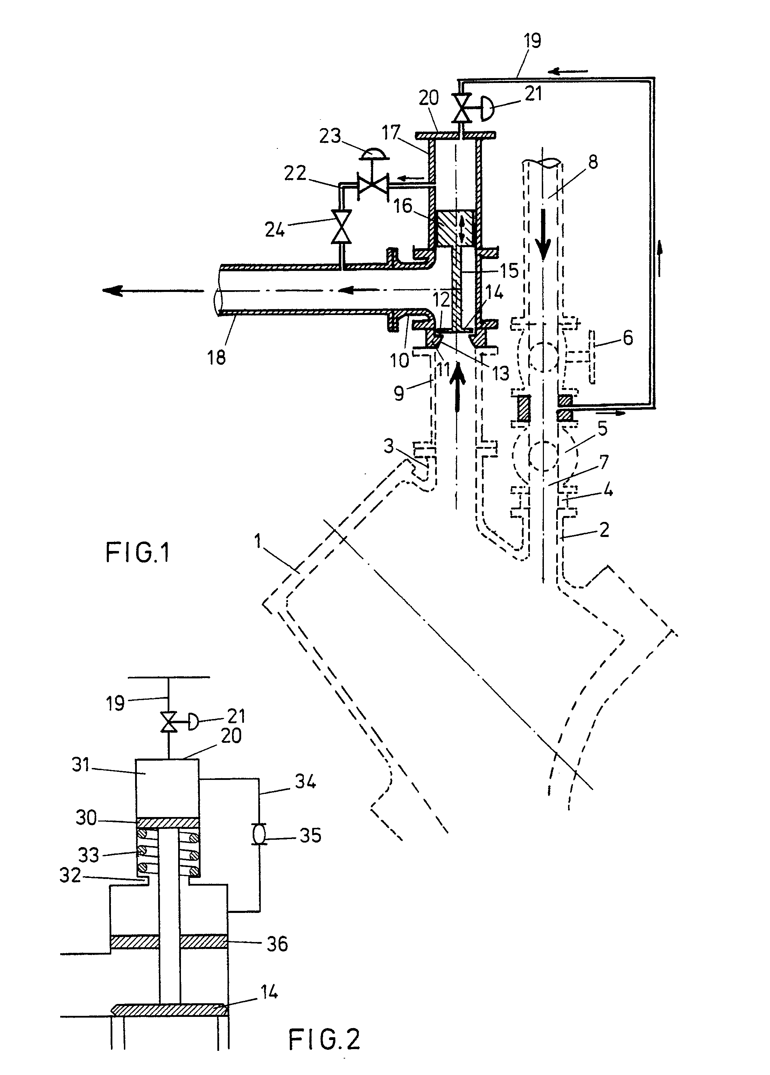

According to Fig. 1 a steam or peeling vessel 1 indicated by broken lines comprises a steam inlet conduit 2 and a steam outlet conduit 3, both indicated by broken lines too.

Connected to the steam inlet conduit 2, with interposition of a stuffing box packing 4 is a length of pipe 7 comprising two ball valves 5, 6, to which pipe in turn a steam supply duct 8 is connected.

Connected to the steam outlet conduit 3 is a conduit portion 9 and connected thereto is a T-shaped conduit portion 10. Provided between the T-shaped conduit portion 10 and the conduit portion 9 is an intermediate ring 11 having provided therein a valve seat 12 and a port 13 of conical configuration. The valve seat 12 cooperates with a valve member 14 whose end that is remote from the valve seat 12 is provided with a piston rod 15 and a piston 16 connected thereto. The piston 16 cooperates with the wall of a substantially closed chamber 17.

Extending transverse of the two ends referred to above is a third conduit, a steam blow-off duct 18, connecting to the T-shaped conduit portion 10.

The operation of the piston 16 is effected by means of a bypass 19, one end of which connects to a cap 20 closing the upper end of the closed chamber, whereas the other end connects to the conduit portion 7, between the two valves 5 and 6.

For the control of the valve 14 and the piston 16 a motor-operated valve 21 is arranged in the bypass 19, while between the substantially closed chamber 17 and the steam blow-off duct 18 a bypass 22 is arranged which is equipped with a control valve 23 operated by a motor (not shown) and a manually operated throttle valve 24 for adjusting the rate of displacement of the piston 16.

By further taking care that the diameter of the conical port 13 is smaller than the diameter of the piston 16, it is ensured that when the valve 14 and the piston 16 are under pressure from the steam present in the vessel, the valve 14 is firmly retained on the valve seat 12, while after the valve 21 has been closed and the control valve 23 is opened, it is ensured, also when the valve 5 is opened, that the closed chamber is relieved and hence the valve member 14 will be pressed off its seat.

In this way easy operation of the valve 14 is possible, while a great quantity of steam will be discharged in a very short time, so that the object contemplated is accomplished - namely, quick removal of the steam from the pressure vessel so that the skins will easily come off the steamed product without any separate "foreign" medium being required. Moreover, in this device there is no rod or the like extending outwardly from the closed chamber 17, so that no sealing problems can arise either.

In the embodiment described with reference to Fig. 1, the valve member 14 when completing its closing mevement will strike the valve seat 12 with great force due to the relatively great weight of the piston 16 and hence to the mass inertia forces generated during movement.

Similarly, upon movement in the opposite direction, the piston 16 will strike against the cap 20 with great force, the result being a considerable chance of breakage.

To overcome these problems, the construction as shown in Fig. 2 has been developed.

The embodiment shown in Fig. 2 shows many similarities to the device shown in and described with reference to Fig. 1: accordingly, only the differences will be described hereinafter.

The space 31 within which a piston 30, corresponding to piston 16, moves, is formed with a considerably smaller diameter than the remaining portion of this T-shaped portion. Further, at the "entrance" of the narrowed portion 31 a collar 32 is provided. Between the collar 32 and a widened portion of the piston 30 a spring 33 is arranged. Further, via a bypass 34 the free end of the closed space 31 communicates with the space where a piston 36 is arranged, whose diameter essentially approximates that of the valve 14, which is adapted to cooperate with said valve seat 12.

Arranged further in said bypass 34 is an adjustable throttle valve for controlling the diameter of the port, so that it is always ensured that whatever the magnitude of the pressures in the various chambers, the movement of the pistons 30, 36 and 14 is such that any risk of breakage is avoided.

The above solution moreover has the advantage that a better guidance of the different pistons is obtained.

Through the incorporation of a spring it is further accomplished that the valve member 14 is not in contact with the valve seat for longer periods of time, for instance during weekends involving longer interruptions of work, so that the valve 14 is prevented from sticking to the seat.

## Claims

1. A steam vessel having a steam inlet conduit and a steam outlet conduit each comprising a valve, the valve in the outlet conduit having a steam blow-off duct connected to it, said outlet valve comprising a T-shaped conduit portion, one end of which connects to the steam outlet conduit of the vessel, the opposite end forming a substantially closed chamber and the third end, extending transverse of said two ends, connecting to the blow-off duct, a valve member being movable within said T-shaped conduit portion and adapted for coaction with a valve seat provided adjacent to the steam outlet conduit, and means for operating the valve member being connected to said opposite end, characterized in that the part located opposite said valve member is piston-shaped and adapted to coact with the wall of the substantially closed chamber, there being further provided a bypass between the substantially closed chamber and the steam vessel.

2. A device according to claim 1, characterized in that the bypass is arranged between the substantially closed chamber and the steam inlet conduit.

3. A device according to claim 2, characterized in that the junction of the bypass and the steam vessel is located upstream of a valve arranged in the steam inlet conduit.

4. A device according to one or more of the preceding claims, characterized in that the valve orifice of one end of the T-shaped conduit portion has a smaller diameter than the piston-shaped oppositely arranged end.

5. A device according to one or more of the preceding claims, characterized in that the valve seat is part of an intermediate ring with a port of conical configuration.

6. A device according to claim 5, characterized in that the T-shaped connecting member (10) and the steam outlet conduit (9) are interconnected by means of bolts with interposition of the intermediate ring (13).

7. A device according to one or more of the preceding claims, characterized in that a bypass is arranged between the blowoff duct and the substantially closed chamber.

8. A device according to claim 7, characterized in that, in addition to a motor-operated control valve, a manually operated throttle valve is arranged in the bypass.

9. A device according to one or more of claims 2-8, characterized in that a motor-operated valve is arranged in the bypass between the closed chamber and the steam vessel.

10. A device according to one or more of claims 5-9, characterized in that the valve seat is provided with a groove adapted for receiving a sealing ring.

11. A device according to one or more of the preceding claims, characterized in that the diameter of the substantially closed chamber is considerably smaller than the diameter of the chamber arranged oppositely thereto, in which the valve member is arranged for cooperation with the valve seat provided in the steam outlet conduit.

12. A device according to claim 11, characterized in that via a bypass the closed space communicates with the space on the other side of said piston that moves within a closed space.

13. A device according to claim 12, characterized in that a throttle valve is arranged in the bypass of claim 12.

14. A device according to claim 11, 12, or 13, characterized in that at the entrance of the closed chamber of smaller diameter, a collar is provided and a spring is arranged for movement between said collar and the enclosed space.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | NL-A-1 610 45  (KUNZ)<br>* the whole document * | 1-12 | A 23 N 7/00<br>F 16 K 31/363<br>F 16 K 47/00 |
| Y | DE-B-1 241 221  (DANNERT)<br>* column 2, line 39 - column 4, line 2 * | 1-10 | |
| Y,A | FR-A-2 319 061  (SULZER)<br>* page 4, line 35 - page 6, line 12; figures 3, 4 * | 11,12,4,9 | |
| A | DE-B-1 234 690  (KUNZ)<br>* column 3, line 38 - column 4, line 33; figure 1 * | 1-3 | |
| A | US-A-4 589 627  (GROTLOH)<br>* column 4, line 14 - column 6, line 20 * | 4,9 | |
| A | US-A-2 882 006  (REINECKE)<br>* column 2, line 8 - column 6, line 19 * | 4,7,8,9 | |
| A | DE-B-1 234 830  (CALOR-EMAG ELEKTR. A.G.)<br>* column 2, lines 46 - 50 * | 8 | |
| A | GB-A-3 620 76  (ZIMMERMANN & JANSEN GMBH.)<br>* claim 1 * | 8 | TECHNICAL FIELDS SEARCHED (Int. Cl.5)<br><br>A 23 N<br>F 16 K |
| A | US-A-4 137 941  (GONIN)<br>* figure 1 * | 10 | |
| A | DE-A-2 119 160  (KRASNODARSKIJ INSTITUT) | | |
| A | NL-A-7 004 753  (N.V. TECHNISCH BUREAU EN MACHINEFABRIEK H. GLASTRA) | | |

The present search report has been drawn up for all claims

| Place of search | Date of completion of search | Examiner |
|---|---|---|
| The Hague | 18 March 91 | VAN OORSCHOT J.W.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document